# EUROPEAN PATENT APPLICATION

(11) **EP 4 734 528 A1**
(43) Date of publication of application: **29.04.2026**
(21) Application number: 24848045.1
(22) Date of filing: 19.07.2024
(51) Int. Cl.: H04N 21/23

(54) **VIDEO ENHANCEMENT METHOD AND APPARATUS, SERVER, AND TERMINAL DEVICE**

(30) Priority: 28.07.2023 CN 202310938114
(71) Applicant: Huawei Technologies Co., Ltd., Shenzhen, Guangdong 518129 (CN)
(72) Inventor: LUO, Shengli, Shenzhen, Guangdong 518129 (CN); WANG, Wei, Shenzhen, Guangdong 518129 (CN)
(74) Representative: Goddar, Heinz J.
(86) International application number: PCT/CN2024/106437
(87) International publication number: WO 2025/026086

(57) **Abstract**

Embodiments of this application provide a video enhancement method and apparatus, a server, and a terminal device. In the video enhancement method, a terminal device obtains a video playback request that carries information about a to-be-played video, and downloads a to-be-played video file from a video distribution source station. Then the terminal device interprets a primary index file of the video file to obtain a secondary index address and a PQ parameter file address, downloads a PQ parameter file from the video distribution source station based on the PQ parameter file address, and downloads bitstream data of the to-be-played video from the video distribution source station based on the secondary index address. Finally, the terminal device obtains, based on the PQ parameter file, a PQ parameter corresponding to the terminal device, and performs a video enhancement operation based on the PQ parameter and the bitstream data to obtain enhanced bitstream data. In this way, effect of adaptation between a video enhancement feature of the terminal device and different types of videos can be improved, to improve video playback effect of the terminal device.

## Description

This application claims priority to Chinese Patent Application No. 202310938114.X, filed with the China National Intellectual Property Administration on July 28, 2023 and entitled "VIDEO ENHANCEMENT METHOD AND APPARATUS, SERVER, AND TERMINAL DEVICE", which is incorporated herein by reference in its entirety.

### TECHNICAL FIELD

Embodiments of this application relate to the field of intelligent terminal technologies, and in particular, to a video enhancement method and apparatus, a server, and a terminal device.

### BACKGROUND

On an online video platform, to support playback experience of a user in different network conditions, reduce key indicators such as playback freezing and a playback start delay, and reduce an adaptation requirement for a video file encoding format on a device side, a video file output through video recording is encoded and compressed on a platform server, and then an encoded and compressed video file is distributed to a client through a media distribution network in a hypertext transfer protocol (hypertext transfer protocol, HTTP) communication form for playback. During encoding and compression by the platform server, video files with different bit rates are usually encapsulated into a multi-bit-rate video file structure by using two encapsulation formats: an HTTP-based adaptive-bit-rate streaming media transfer protocol (HTTP live streaming, HLS) and dynamic adaptive streaming over HTTP (dynamic adaptive streaming over HTTP, DASH). In this way, a client can select, based on a current network condition during playback, a binary streaming file with an appropriate bit rate for download and playback, to implement a dynamic bit rate.

In addition, because the platform server encodes and compresses a raw video, subjective quality of the video is compromised to some extent. Therefore, with development of artificial intelligence (artificial intelligence, AI) technologies, the platform server may optimize a video file by using an algorithm during encoding and compression, to better adapt to and improve subjective experience of playback on the client. However, during enhancement by the platform server, because display parameters (for example, luminance and/or colors) of different terminal devices are different, playback rendering effect of an enhanced video streaming file on screens of different clients greatly varies, and actual effect on some terminal devices may even affect subjective playback experience of a user.

### SUMMARY

Embodiments of this application provide a video enhancement method and apparatus, a server, and a terminal device, and embodiments of this application further provide a computer-readable storage medium, to improve application effect of a video enhancement feature of a terminal device and improve video playback effect of the terminal device.

According to a first aspect, an embodiment of this application provides a video enhancement method, including: obtaining a video playback request, where the video playback request carries information about a to-be-played video; downloading a to-be-played video file from a video distribution source station based on the information about the to-be-played video; interpreting a primary index file of the video file to obtain a secondary index address and a perceptual quantizer PQ parameter file address of the to-be-played video; downloading a PQ parameter file from the video distribution source station based on the PQ parameter file address; downloading bitstream data of the to-be-played video from the video distribution source station based on the secondary index address; obtaining, based on the PQ parameter file, a PQ parameter corresponding to a terminal device; and performing a video enhancement operation based on the PQ parameter and the bitstream data to obtain enhanced bitstream data.

In the foregoing video enhancement method, the terminal device obtains the video playback request that carries the information about the to-be-played video, and downloads the to-be-played video file from the video distribution source station based on the information about the to-be-played video. Then the terminal device interprets the primary index file of the video file to obtain the secondary index address and the PQ parameter file address of the to-be-played video, downloads the PQ parameter file from the video distribution source station based on the PQ parameter file address, and downloads the bitstream data of the to-be-played video from the video distribution source station based on the secondary index address. Finally, the terminal device obtains, based on the PQ parameter file, the PQ parameter corresponding to the terminal device, and performs the video enhancement operation based on the PQ parameter and the bitstream data to obtain the enhanced bitstream data. In this way, effect of adaptation between a video enhancement feature of the terminal device and different types of videos can be improved, to improve video playback effect of the terminal device.

In a possible implementation, after performing the video enhancement operation based on the PQ parameter and the bitstream data to obtain the enhanced bitstream data, the method further includes: rendering and playing the enhanced bitstream data.

In a possible implementation, interpreting the primary index file of the video file to obtain the secondary index address and the perceptual quantizer PQ parameter file address of the to-be-played video includes: interpreting the primary index file of the video file according to an encapsulation protocol of the video file, to obtain the secondary index address of the to-be-played video; and if the primary index file includes a tag of the PQ parameter file, obtaining a PQ parameter file address corresponding to the tag.

In a possible implementation, obtaining, based on the PQ parameter file, the PQ parameter corresponding to the terminal device includes: interpreting the PQ parameter file based on a structure of the PQ parameter file; and obtaining, based on information about the terminal device, the corresponding PQ parameter from a PQ parameter included in the PQ parameter file.

According to a second aspect, an embodiment of this application provides a video enhancement method, including: obtaining a recorded video source file; performing a transcoding operation and a stream segmentation operation on the video source file; encapsulating a segmented video file to obtain an encapsulated video file, where the encapsulated video file includes a primary index file; constructing a perceptual quantizer PQ parameter file corresponding to the segmented video file, where the PQ parameter file includes information about a terminal device; adding a tag and an address of the PQ parameter file to the primary index file; and sending the encapsulated video file and the PQ parameter file to a video distribution source station.

In the foregoing video enhancement method, a server obtains the recorded video source file; performs the transcoding operation and the stream segmentation operation on the video source file; encapsulates the segmented video file to obtain the encapsulated video file, where the encapsulated video file includes the primary index file; and constructs the PQ parameter file corresponding to the segmented video file. Then the server adds the tag and the address of the PQ parameter file to the primary index file, and sends the encapsulated video file and the PQ parameter file to the video distribution source station. Further, the server generates a PQ parameter corresponding to the information about the terminal device, and sends the PQ parameter to the video distribution source station, and the video distribution source station updates the PQ parameter to the PQ parameter file. In this way, the PQ parameter can be generated based on both a parameter of the terminal device and a video transcoding parameter, to effectively implement parameter collaboration between the server and the terminal device. Further, this can improve effect of adaptation between a video enhancement feature of the terminal device and different types of videos, to improve video playback effect of the terminal device.

In a possible implementation, after sending the encapsulated video file and the PQ parameter file to the video distribution source station, the method further includes: obtaining a parameter of the terminal device and a video transcoding parameter; training the parameter of the terminal device and the video transcoding parameter by using a PQ algorithm, to obtain a PQ algorithm model; generating, based on the PQ algorithm model and the encapsulated video file, a PQ parameter that is in the PQ parameter file and that corresponds to the information about the terminal device; and sending the PQ parameter to the video distribution source station, for the video distribution source station to update the PQ parameter to the PQ parameter file.

According to a third aspect, an embodiment of this application provides a video enhancement apparatus. The apparatus is included in a terminal device, and the apparatus has a function of implementing the behavior of the terminal device in the first aspect and the possible implementations of the first aspect. The function may be implemented by hardware, or may be implemented by hardware executing corresponding software. The hardware or the software includes one or more modules or units corresponding to the foregoing function, for example, a video playback module, a PQ parameter file interpretation module, and a video enhancement module.

According to a fourth aspect, an embodiment of this application provides a video enhancement apparatus. The apparatus is included in a server, and the apparatus has a function of implementing the behavior of the server in the second aspect and the possible implementations of the second aspect. The function may be implemented by hardware, or may be implemented by hardware executing corresponding software. The hardware or the software includes one or more modules or units corresponding to the foregoing function, for example, a media encoding module, a stream segmentation module, and a sending module.

According to a fifth aspect, an embodiment of this application provides a terminal device, including one or more processors, a memory, a plurality of application programs, and one or more computer programs. The one or more computer programs is/are stored in the memory. The one or more computer programs includes/include instructions. When the instructions are executed by the terminal device, the terminal device is enabled to perform the method provided in the first aspect.

According to a sixth aspect, an embodiment of this application provides a server, including one or more processors, a memory, a plurality of application programs, and one or more computer programs. The one or more computer programs is/are stored in the memory. The one or more computer programs includes/include instructions. When the instructions are executed by the server, the server is enabled to perform the method provided in the second aspect.

It should be understood that the technical solutions in the third aspect and the fifth aspect of embodiments of this application are consistent with the technical solution in the first aspect of embodiments of this application, and beneficial effects achieved in the aspects and corresponding feasible implementations are similar. Details are not described again.

It should be understood that the technical solutions in the fourth aspect and the sixth aspect of embodiments of this application are consistent with the technical solution in the second aspect of embodiments of this application, and beneficial effects achieved in the aspects and corresponding feasible implementations are similar. Details are not described again.

According to a seventh aspect, an embodiment of this application provides a computer-readable storage medium. The computer-readable storage medium stores a computer program. When the computer program is run on a computer, the computer is enabled to perform the method provided in the first aspect.

According to an eighth aspect, an embodiment of this application provides a computer-readable storage medium. The computer-readable storage medium stores a computer program. When the computer program is run on a computer, the computer is enabled to perform the method provided in the second aspect.

According to a ninth aspect, an embodiment of this application provides a computer program. When executed by a computer, the computer program is used for performing the method provided in the first aspect.

According to a tenth aspect, an embodiment of this application provides a computer program. When executed by a computer, the computer program is used for performing the method provided in the second aspect.

In a possible design, the program in the ninth aspect and the tenth aspect may be entirely or partially stored in a storage medium packaged with a processor, or may be partially or entirely stored in a memory not packaged with a processor.

### BRIEF DESCRIPTION OF DRAWINGS

FIG. 1 is a diagram of a file structure in a multi-bit-rate video encapsulation format;
FIG. 2 is a diagram of a principle of performing algorithm enhancement on a video stream by a terminal device;
FIG. 3 is a diagram of a structure of a terminal device according to an embodiment of this application;
FIG. 4 is a diagram of a structure of a server according to an embodiment of this application;
FIG. 5 is a diagram of an application scenario of a video enhancement method according to an embodiment of this application;
FIG. 6 shows a system architecture of a video enhancement method according to an embodiment of this application;
FIG. 7 is a diagram of a video file storage structure according to an embodiment of this application;
FIG. 8A and FIG. 8B are a flowchart of a video enhancement method according to an embodiment of this application;
FIG. 9 is a flowchart of a video enhancement method according to another embodiment of this application;
FIG. 10 is a diagram of a structure of a primary index file according to an embodiment of this application;
FIG. 11 is a diagram of a structure of a PQ parameter file according to an embodiment of this application;
FIG. 12 is a flowchart of a video enhancement method according to still another embodiment of this application;
FIG. 13 is a flowchart of a video enhancement method according to still another embodiment of this application;
FIG. 14 is a flowchart of a video enhancement method according to still another embodiment of this application;
FIG. 15 is a diagram of a structure of a terminal device according to another embodiment of this application;
FIG. 16 is a diagram of a structure of a server according to another embodiment of this application; and
FIG. 17 is a diagram of a structure of a server according to still another embodiment of this application.

### DESCRIPTION OF EMBODIMENTS

Terms used in embodiments of this application are merely intended to describe specific embodiments of this application, but not to limit this application.

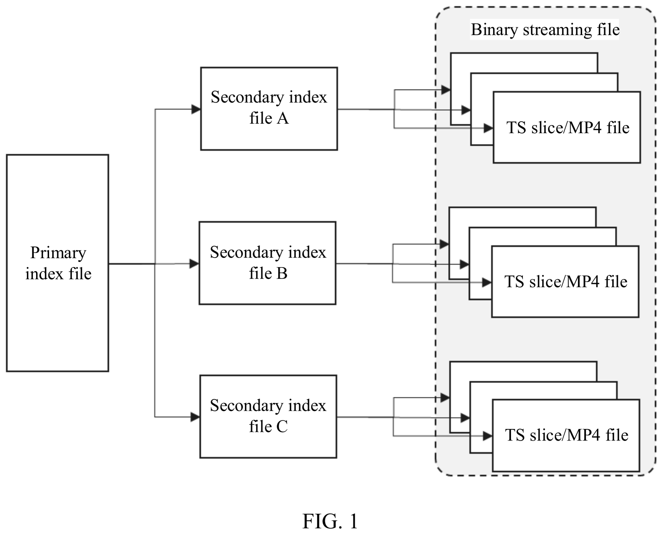

When encoding and compressing video files, a platform server usually encapsulates video files with different bit rates into a group of multi-bit-rate video file structures. A file structure in a multi-bit-rate video encapsulation format may be shown in FIG. 1. FIG. 1 is a diagram of a file structure in a multi-bit-rate video encapsulation format.

When the platform server enhances a video file, because display parameters (for example, luminance and/or colors) of different terminal devices are different, playback rendering effect of an enhanced video streaming file on screens of different clients greatly varies, and actual effect on some terminal devices may even affect subjective playback experience of a user.

To resolve this problem, in a related conventional technology, a concept of metadata (including static metadata and dynamic metadata) is introduced in some new high dynamic range (high dynamic range, HDR) video encoding technologies. The metadata is used to describe information about some technical parameters used during video encoding by a server. During decoding and rendering, a terminal device may interpret a related parameter and perform decoding and rendering correspondingly, to better maintain playback effect on a device side.

However, an HDR metadata technology usually has two problems during actual application.
1. A related concept of metadata is used only in a newly designed HDR technology, and is inapplicable to some videos that are not suitable for encoding by using an HDR technology.
2. In the HDR technology, metadata is encapsulated in a video streaming file, and can express only some parameters during actual video encoding. Differences in playback effects caused by variations in screens on different terminal devices cannot be addressed. If actual playback effect of some terminal devices is poor, the problem cannot be effectively resolved by adjusting metadata.

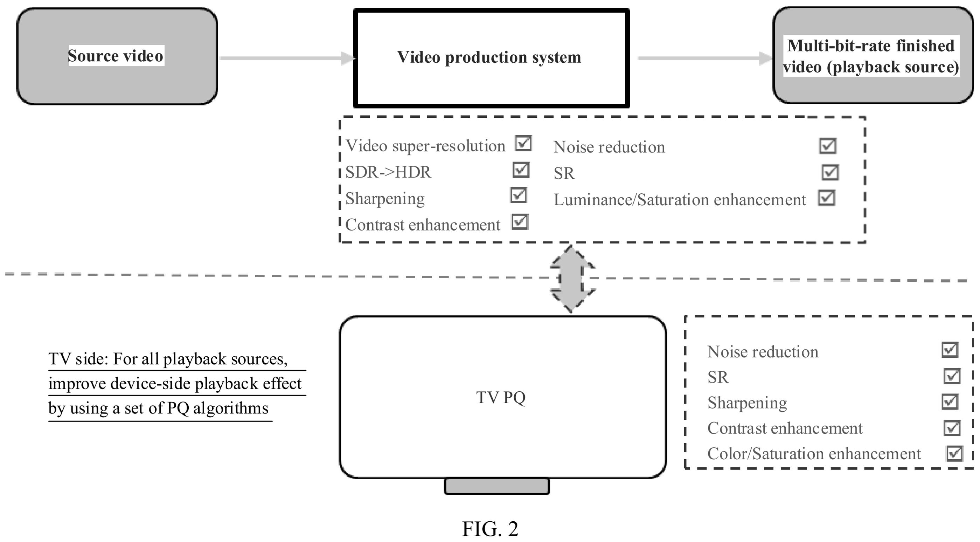

To resolve the problems facing the HDR metadata technology, it is proposed in the related conventional technology that a terminal device performs algorithm (for example, a perceptual quantizer (perceptual quantizer, PQ) algorithm) enhancement on a video stream during video playback rendering, to mitigate impact of a screen parameter of the terminal device on subjective playback experience. A specific technical principle is shown in FIG. 2. FIG. 2 is a diagram of a principle of performing algorithm enhancement on a video stream by a terminal device.

It can be learned from FIG. 2 that a video production system performs one or a combination of the following operations on a source video to obtain a multi-bit-rate finished video (namely, a playback source): a video super-resolution operation, a standard dynamic range (standard dynamic range, SDR)->HDR operation, a sharpening operation, a contrast enhancement operation, a noise reduction operation, a super-resolution (super resolution, SR) operation, and a luminance/saturation enhancement operation. After obtaining the playback source, a television (television, TV) side (namely, a terminal device side) performs one or a combination of the following operations on the playback source by using a set of PQ algorithms: noise reduction, SR, sharpening, contrast enhancement, and color/saturation enhancement, to mitigate impact of a screen parameter of the TV on subjective playback experience.

However, this solution also has the following problems during implementation.
1. Due to limited computing power of a terminal device, a PQ parameter trained by using a screen parameter can only be preloaded. Consequently, an enhanced algorithm on the device side cannot be adjusted correspondingly based on a transcoding parameter of a specific video, and application effect of the algorithm is poor.
2. If a platform server uses different algorithm parameters for different videos, playback effect on a device side varies, and negative effect even occurs after an algorithm on the platform server and an algorithm on the device side are superposed. In this case, the algorithm on the device side has poor adaptability.
3. After a video is produced through encoding, if it is found that playback effect on screens of terminal devices of some models is poor, the platform server can only re-adjust a video transcoding algorithm. This not only causes high costs, but is also likely to cause degradation of playback effect on screens of terminal devices of other models.

Based on the foregoing problems, embodiments of this application provide a video enhancement method, to resolve the following problems:
1. A PQ parameter of video enhancement performed by a terminal device cannot be adaptively adjusted based on a transcoding parameter of a specific to-be-played video.
2. When a video produced through transcoding has poor playback effect on screens of some terminal devices, a video platform server cannot resolve a known playback experience problem by adjusting PQ parameters of the terminal devices.

The video enhancement method provided in embodiments of this application may be applied to a terminal device. The terminal device may be a smartphone, a tablet computer, a wearable device, a vehicle-mounted device, an augmented reality (augmented reality, AR) device/virtual reality (virtual reality, VR) device, a notebook computer, an ultra-mobile personal computer (ultra-mobile personal computer, UMPC), a netbook, a personal digital assistant (personal digital assistant, PDA), or the like. A specific type of the terminal device is not limited in embodiments of this application.

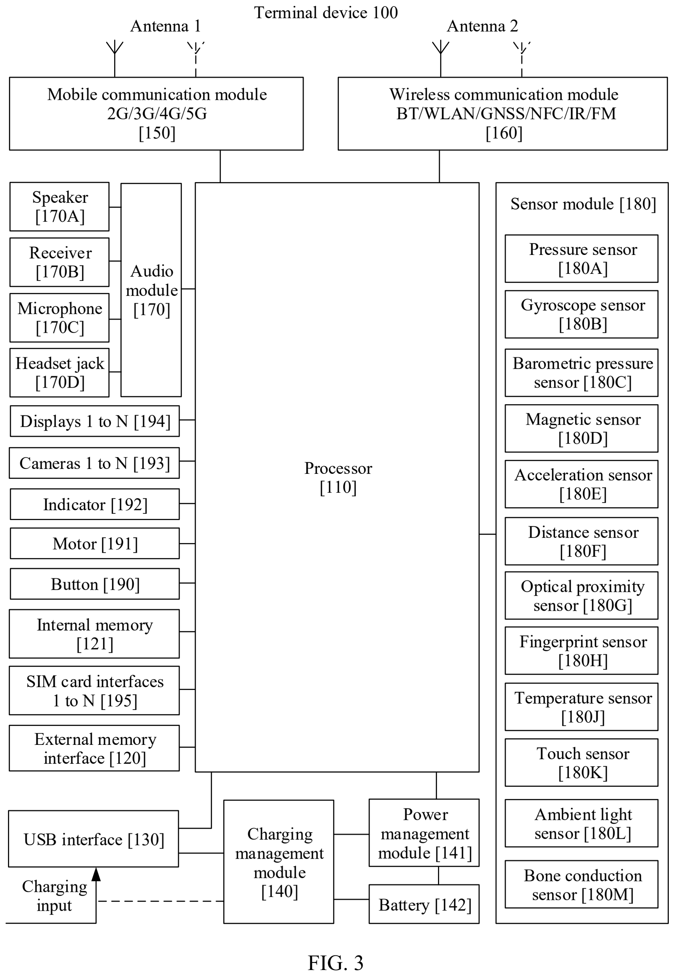

For example, FIG. 3 is a diagram of a structure of a terminal device according to an embodiment of this application. As shown in FIG. 3, the terminal device 100 may include a processor 110, an external memory interface 120, an internal memory 121, a universal serial bus (universal serial bus, USB) interface 130, a charging management module 140, a power management module 141, a battery 142, an antenna 1, an antenna 2, a mobile communication module 150, a wireless communication module 160, an audio module 170, a speaker 170A, a receiver 170B, a microphone 170C, a headset jack 170D, a sensor module 180, a button 190, a motor 191, an indicator 192, a camera 193, a display 194, a subscriber identity module (subscriber identity module, SIM) card interface 195, and the like. The sensor module 180 may include a pressure sensor 180A, a gyroscope sensor 180B, a barometric pressure sensor 180C, a magnetic sensor 180D, an acceleration sensor 180E, a distance sensor 180F, an optical proximity sensor 180G, a fingerprint sensor 180H, a temperature sensor 180J, a touch sensor 180K, an ambient light sensor 180L, a bone conduction sensor 180M, and the like.

It can be understood that the structure shown in this embodiment of this application does not constitute a specific limitation on the terminal device 100. In some other embodiments of this application, the terminal device 100 may include more or fewer components than those shown in the figure, or some components may be combined, or some components may be split, or the components may be arranged differently. The components shown in the figure may be implemented by using hardware, software, or a combination of software and hardware.

The processor 110 may include one or more processing units. For example, the processor 110 may include an application processor (application processor, AP), a modem processor, a graphics processing unit (graphics processing unit, GPU), an image signal processor (image signal processor, ISP), a controller, a video codec, a digital signal processor (digital signal processor, DSP), a baseband processor, and/or a neural-network processing unit (neural-network processing unit, NPU). Different processing units may be independent components, or may be integrated into one or more processors.

The controller may generate an operation control signal based on an instruction operation code and a timing signal, to control instruction fetching and instruction execution.

A memory may be further disposed in the processor 110 to store instructions and data. In some embodiments, the memory in the processor 110 is a cache. The memory may store instructions or data that have/has been used or are/is cyclically used by the processor 110. If the processor 110 needs to use the instructions or the data again, the processor may directly invoke the instructions or the data from the memory. This avoids repeated access, reduces waiting time of the processor 110, and therefore improves system efficiency.

In some embodiments, the processor 110 may include one or more interfaces. The interface may include an inter-integrated circuit (inter-integrated circuit, I2C) interface, an inter-integrated circuit sound (inter-integrated circuit sound, I2S) interface, a pulse code modulation (pulse code modulation, PCM) interface, a universal asynchronous receiver/transmitter (universal asynchronous receiver/transmitter, UART) interface, a mobile industry processor interface (mobile industry processor interface, MIPI), a general-purpose input/output (general-purpose input/output, GPIO) interface, a subscriber identity module (subscriber identity module, SIM) interface, a universal serial bus (universal serial bus, USB) interface, and/or the like.

The charging management module 140 is configured to receive charging input from a charger. The charger may be a wireless charger or a wired charger. In some embodiments of wired charging, the charging management module 140 may receive charging input from a wired charger through the USB interface 130. In some embodiments of wireless charging, the charging management module 140 may receive wireless charging input through a wireless charging coil of the terminal device 100. When charging the battery 142, the charging management module 140 may further supply power to the terminal device 100 through the power management module 141.

The power management module 141 is configured to connect to the battery 142, the charging management module 140, and the processor 110. The power management module 141 receives input from the battery 142 and/or the charging management module 140, and supplies power to the processor 110, the internal memory 121, the display 194, the camera 193, the wireless communication module 160, and the like. The power management module 141 may be further configured to monitor parameters such as a battery capacity, a battery cycle count, and a battery health status (electric leakage and impedance). In some other embodiments, the power management module 141 may alternatively be disposed in the processor 110. In some other embodiments, the power management module 141 and the charging management module 140 may alternatively be disposed in a same component.

A wireless communication function of the terminal device 100 may be implemented by the antenna 1, the antenna 2, the mobile communication module 150, the wireless communication module 160, the modem processor, the baseband processor, and the like.

The antenna 1 and the antenna 2 are configured to transmit and receive an electromagnetic wave signal. Each antenna in the terminal device 100 may be configured to cover one or more communication frequency bands. Different antennas may be further reused to improve antenna utilization. For example, the antenna 1 may be reused as a diversity antenna of a wireless local area network. In some other embodiments, the antenna may be used in combination with a tuning switch.

The mobile communication module 150 may provide a solution applied to the terminal device 100 for wireless communication such as 2G/3G/4G/5G. The mobile communication module 150 may include at least one filter, a switch, a power amplifier, a low noise amplifier (low noise amplifier, LNA), and the like. The mobile communication module 150 may receive an electromagnetic wave through the antenna 1, perform processing such as filtering or amplification on the received electromagnetic wave, and transmit a processed electromagnetic wave to the modem processor for demodulation. The mobile communication module 150 may further amplify a signal modulated by the modem processor, and convert an amplified signal into an electromagnetic wave for radiation through the antenna 1. In some embodiments, at least some functional modules of the mobile communication module 150 may be disposed in the processor 110. In some embodiments, at least some functional modules of the mobile communication module 150 may be disposed in a same component as at least some modules of the processor 110.

The modem processor may include a modulator and a demodulator. The modulator is configured to modulate a to-be-sent low-frequency baseband signal into a medium-high-frequency signal. The demodulator is configured to demodulate a received electromagnetic wave signal into a low-frequency baseband signal. Then the demodulator transmits the low-frequency baseband signal obtained through demodulation to the baseband processor for processing. The low-frequency baseband signal is processed by the baseband processor, and then a processed signal is transmitted to the application processor. The application processor outputs a sound signal through an audio device (not limited to the speaker 170A, the receiver 170B, and the like), or displays an image or a video through the display 194. In some embodiments, the modem processor may be an independent component. In some other embodiments, the modem processor may be independent of the processor 110, and is disposed in a same component as the mobile communication module 150 or another functional module.

The wireless communication module 160 may provide a solution applied to the terminal device 100 for wireless communication such as a wireless local area network (wireless local area network, WLAN) (for example, a wireless fidelity (wireless fidelity, Wi-Fi) network), Bluetooth (Bluetooth, BT), a global navigation satellite system (global navigation satellite system, GNSS), frequency modulation (frequency modulation, FM), a near field communication (near field communication, NFC) technology, or an infrared (infrared, IR) technology. The wireless communication module 160 may be one or more components integrating at least one communications processor module. The wireless communication module 160 receives an electromagnetic wave through the antenna 2, performs frequency modulation and filtering on an electromagnetic wave signal, and sends a processed signal to the processor 110. The wireless communication module 160 may further receive a to-be-sent signal from the processor 110, perform frequency modulation and amplification on the signal, and convert a processed signal into an electromagnetic wave for radiation through the antenna 2.

In some embodiments, in the terminal device 100, the antenna 1 is coupled to the mobile communication module 150, and the antenna 2 is coupled to the wireless communication module 160, so that the terminal device 100 can communicate with a network and another device by using a wireless communication technology. The wireless communication technology may include a global system for mobile communications (global system for mobile communications, GSM), a general packet radio service (general packet radio service, GPRS), code division multiple access (code division multiple access, CDMA), wideband code division multiple access (wideband code division multiple access, WCDMA), time-division code division multiple access (time-division code division multiple access, TD-CDMA), long term evolution (long term evolution, LTE), BT, a GNSS, a WLAN, NFC, FM, an IR technology, and/or the like. The GNSS may include a global positioning system (global positioning system, GPS), a global navigation satellite system (global navigation satellite system, GLONASS), a BeiDou navigation satellite system (BeiDou navigation satellite system, BDS), a quasi-zenith satellite system (quasi-zenith satellite system, QZSS), and/or a satellite-based augmentation system (satellite-based augmentation system, SBAS).

The terminal device 100 implements a display function through the GPU, the display 194, the application processor, and the like. The GPU is a microprocessor for image processing, and is connected to the display 194 and the application processor. The GPU is configured to perform mathematical and geometric computation for graphics rendering. The processor 110 may include one or more GPUs that execute program instructions to generate or change displayed information.

The display 194 is configured to display an image, a video, or the like. The display 194 includes a display panel. The display panel may be a liquid crystal display (liquid crystal display, LCD), an organic light-emitting diode (organic light-emitting diode, OLED), an active-matrix organic light-emitting diode (active-matrix organic light-emitting diode, AMOLED), a flexible light-emitting diode (flex light-emitting diode, FLED), a mini-LED, a micro-LED, a micro-OLED, a quantum dot light-emitting diode (quantum dot light-emitting diode, QLED), or the like. In some embodiments, the terminal device 100 may include one or N displays 194, where N is a positive integer greater than 1.

The terminal device 100 may implement an image shooting function through the ISP, the camera 193, the video codec, the GPU, the display 194, the application processor, and the like.

The ISP is configured to process data fed back by the camera 193. For example, during photographing, a shutter is pressed, and light is transmitted to a photosensitive element of the camera through a lens. An optical signal is converted into an electrical signal, and the photosensitive element of the camera transmits the electrical signal to the ISP for processing, to convert the electrical signal into a visible image. The ISP may further perform algorithm optimization on noise, luminance, and complexion of the image. The ISP may further optimize parameters such as exposure and color temperature of an image shooting scene. In some embodiments, the ISP may be disposed in the camera 193.

The camera 193 is configured to capture a static image or a video. An optical image of an object is generated through the lens, and is projected onto the photosensitive element. The photosensitive element may be a charge coupled device (charge coupled device, CCD) or a complementary metal-oxide-semiconductor (complementary metal-oxide-semiconductor, CMOS) phototransistor. The photosensitive element converts an optical signal into an electrical signal, and then transmits the electrical signal to the ISP to convert the electrical signal into a digital image signal. The ISP outputs the digital image signal to the DSP for processing. The DSP converts the digital image signal into an image signal in a standard format, for example, RGB or YUV. In some embodiments, the terminal device 100 may include one or N cameras 193, where N is a positive integer greater than 1.

The digital signal processor is configured to process a digital signal, and may further process other digital signals in addition to the digital image signal. For example, when the terminal device 100 selects a frequency, the digital signal processor is configured to perform Fourier transform on frequency energy.

The video codec is configured to compress or decompress a digital video. The terminal device 100 may support one or more types of video codecs. In this way, the terminal device 100 may play or record videos in a plurality of coding formats, for example, moving picture experts group (moving picture experts group, MPEG)-1, MPEG-2, MPEG-3, and MPEG-4.

The NPU is a neural-network (neural-network, NN) computing processor that quickly processes input information with reference to a structure of a biological neural network, for example, a mode of transfer between human brain neurons, and may further continuously perform self-learning. Intelligent cognition applications, such as image recognition, facial recognition, speech recognition, and text understanding, of the terminal device 100 may be implemented through the NPU.

The external memory interface 120 may be used for connecting an external memory card, for example, a microSD card, to extend a storage capability of the terminal device 100. The external memory card communicates with the processor 110 through the external memory interface 120, to implement a data storage function. For example, files such as music and videos are stored in the external memory card.

The internal memory 121 may be configured to store computer-executable program code, and the executable program code includes instructions. The internal memory 121 may include a program storage area and a data storage area. The program storage area may store an operating system, an application for at least one function (for example, a sound play function or an image play function), and the like. The data storage area may store data (for example, audio data and an address book) created during use of the terminal device 100. In addition, the internal memory 121 may include a high-speed random access memory, or may include a non-volatile memory, for example, at least one magnetic disk storage device, a flash memory, or a universal flash storage (universal flash storage, UFS). The processor 110 runs the instructions stored in the internal memory 121 and/or instructions stored in the memory disposed in the processor, to implement various function applications and data processing of the terminal device 100.

The terminal device 100 may implement an audio function, for example, music playing or recording, through the audio module 170, the speaker 170A, the receiver 170B, the microphone 170C, the headset jack 170D, the application processor, and the like.

The audio module 170 is configured to convert digital audio information into an analog audio signal for output, and is also configured to convert analog audio input into a digital audio signal. The audio module 170 may be further configured to encode and decode an audio signal. In some embodiments, the audio module 170 may be disposed in the processor 110, or some functional modules of the audio module 170 are disposed in the processor 110.

The speaker 170A, also referred to as a "loudspeaker", is configured to convert an electrical audio signal into a sound signal. The terminal device 100 may be used to listen to music or answer a call in a hands-free mode through the speaker 170A.

The receiver 170B, also referred to as an "earpiece", is configured to convert an electrical audio signal into a sound signal. When a call is answered or a voice message is listened to through the terminal device 100, the receiver 170B may be put close to a human ear to listen to a voice.

The microphone 170C, also referred to as a "mike" or a "mic", is configured to convert a sound signal into an electrical signal. When making a call or sending a voice message, a user may bring their mouth close to the microphone 170C to make a sound, to input a sound signal to the microphone 170C. At least one microphone 170C may be disposed in the terminal device 100. In some other embodiments, two microphones 170C may be disposed in the terminal device 100, to implement a noise reduction function in addition to capturing a sound signal. In some other embodiments, three, four, or more microphones 170C may alternatively be disposed in the terminal device 100, to capture a sound signal, implement noise reduction, and recognize a sound source, to implement a directional recording function and the like.

The headset jack 170D is used for connecting a wired headset. The headset jack 170D may be the USB interface 130, or may be a 3.5 mm open mobile terminal platform (open mobile terminal platform, OMTP) standard interface or a cellular telecommunications industry association of the USA (cellular telecommunications industry association of the USA, CTIA) standard interface.

The button 190 includes a power button, a volume button, and the like. The button 190 may be a mechanical button or a touch button. The terminal device 100 may receive input on the button, and generate button signal input related to a user setting and function control of the terminal device 100.

The motor 191 may generate a vibration prompt. The motor 191 may be configured to produce an incoming call vibration prompt or a touch vibration feedback. For example, touch operations performed on different applications (for example, photographing and audio playing) may correspond to different vibration feedback effects. The motor 191 may also correspond to different vibration feedback effects for touch operations performed on different areas of the display 194. Different application scenarios (for example, a time reminder, information reception, an alarm clock, and a game) may also correspond to different vibration feedback effects. Touch vibration feedback effect may be further customized.

The indicator 192 may be an indicator light, and may be configured to indicate a charging status and a battery level change, or may be configured to indicate a message, a missed call, a notification, and the like.

The SIM card interface 195 is used for connecting a SIM card. The SIM card may be inserted into the SIM card interface 195 or removed from the SIM card interface 195, to implement contact with or separation from the terminal device 100. The terminal device 100 may support one or N SIM card interfaces, where N is a positive integer greater than 1. The SIM card interface 195 may support a nano-SIM card, a micro-SIM card, a SIM card, and the like. A plurality of cards may be inserted in a same SIM card interface 195 at the same time. The plurality of cards may be of a same type or different types. The SIM card interface 195 is also compatible with different types of SIM cards. The SIM card interface 195 is also compatible with an external memory card. The terminal device 100 interacts with a network through the SIM card, to implement functions such as conversation and data communication. In some embodiments, an eSIM, namely, an embedded SIM card, is used for the terminal device 100. The eSIM card may be embedded into the terminal device 100, and cannot be separated from the terminal device 100.

In addition, the video enhancement method provided in embodiments of this application is implemented by both a terminal device and a server. The server may be a video platform server, which may also be referred to as an online video platform server or a platform server. The server may be disposed on a cloud. A specific type of the server is not limited in embodiments of this application.

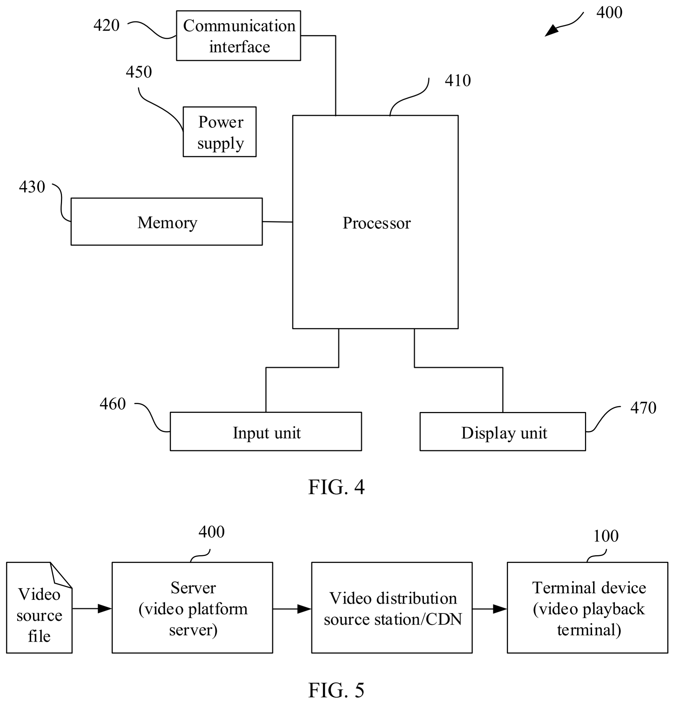

For example, FIG. 4 is a diagram of a structure of a server according to an embodiment of this application. As shown in FIG. 4, the server 400 includes a processor 410 and a communication interface 420. Optionally, the server 400 may further include a memory 430. The processor 410, the communication interface 420, and the memory 430 may communicate with each other through an internal connection path, to transmit a control signal and/or a data signal. The memory 430 is configured to store a computer program. The processor 410 is configured to invoke the computer program from the memory 430 and run the computer program.

The processor 410 and the memory 430 may be combined into one processing apparatus, and are more commonly components independent of each other. The processor 410 is configured to execute program code stored in the memory 430. During specific implementation, the memory 430 may alternatively be integrated in the processor 410 or independent of the processor 410.

In addition, to improve a function of the server 400, the server 400 may further include one or more of an input unit 460, a display unit 470, and the like.

Optionally, the server 400 may further include a power supply 450, configured to supply power to various components or circuits in the server 400.

It should be understood that the processor 410 in the server 400 shown in FIG. 4 may be a system-on-a-chip SoC. The processor 410 may include a central processing unit (central processing unit, CPU), and may further include another type of processor, for example, a graphics processing unit (graphics processing unit, GPU).

For ease of understanding, in the following embodiments of this application, the terminal device 100 with the structure shown in FIG. 2 and the server 400 with the structure shown in FIG. 4 are used as examples to describe in detail the video enhancement method provided in embodiments of this application with reference to the accompanying drawings and application scenarios.

An application scenario of embodiments of this application is as follows: After encoding a video source file uploaded to the server 400, the server 400 stores an encoded video in a video distribution source station or a content delivery network (content delivery network, CDN). The video distribution source station distributes the encoded video to the terminal device 100 through a CDN service. The terminal device 100 provides a video enhancement capability when playing the video, to improve subjective playback experience of the video on the terminal device 100. FIG. 5 is a diagram of an application scenario of a video enhancement method according to an embodiment of this application. As shown in FIG. 5, after performing a video enhancement operation, a multi-bit-rate encoding operation, and/or a video stream segmentation operation on a video source file by using a media encoding and stream segmentation capability, the server 400 encapsulates a processed video file into a storage format of a multi-video binary file described by using an index file (an HLS protocol and a DASH protocol are commonly used for encapsulation).

After obtaining the video index file and the video binary file from the video distribution source station through HTTP communication, the terminal device 100 performs video decoding and rendering. During the video decoding and rendering, a video enhancement module of the terminal device 100 executes a video enhancement PQ algorithm to improve video playback experience on the terminal device 100.

Generally, the video enhancement method provided in embodiments of this application may include:
1. First, a structure definition of a video file is extended to add a PQ parameter file without affecting an existing video encoding/decoding method, to describe definitions of PQ parameters for performing device-side enhancement on a video on terminal devices 100 of different models.
2. The video platform server 400 outputs a corresponding PQ parameter file, and then updates the PQ parameter file to the video distribution source station. In this way, during adjustment of a device-side algorithm, a basic video index file or a video source (.ts/.mp4) file does not need to be updated, so that reliability of a basic video playback process is greatly ensured.
3. An interpretation capability for the PQ parameter file needs to be added to the terminal device 100. The capability may include:
   (1) interpreting all files of an index file to obtain a storage address of the PQ parameter file on the video distribution source station;
   (2) downloading the PQ parameter file from the video distribution source station;
   (3) interpreting the PQ parameter file, and obtaining an applicable PQ parameter from the PQ parameter file based on a model of a device that currently runs video decoding; and
   (4) inputting a PQ parameter obtained through interpretation, together with the video source file, to a decoder for video decoding, and driving, by using the PQ parameter, execution of a device-side enhancement algorithm during decoding.

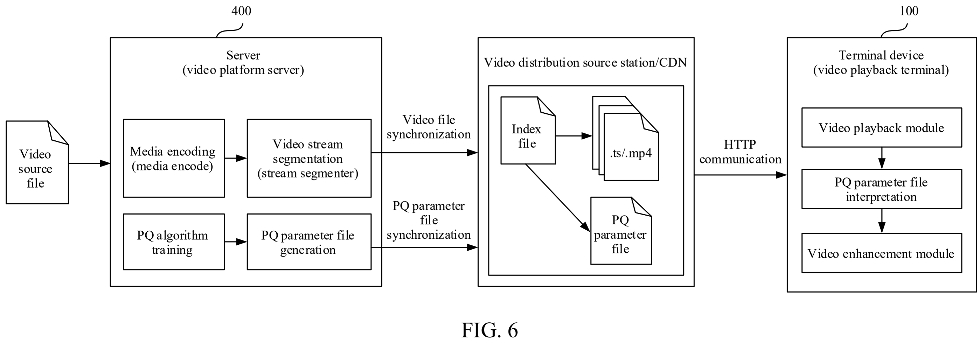

FIG. 6 shows a system architecture of a video enhancement method according to an embodiment of this application. As shown in FIG. 6, the system architecture in this embodiment of this application provides a video file storage structure. After encoding a video source file uploaded to a server 400, the server 400 stores an encoded video in a video distribution source station or a CDN. In addition, the server 400 provides a PQ algorithm training module and a PQ parameter file generation module to support production of a PQ parameter file in the video file storage structure provided in this embodiment of this application. The video distribution source station distributes an encoded video file and the PQ parameter file to a terminal device 100 through a CDN service. When playing the video, the terminal device 100 provides a PQ parameter file interpretation module in the terminal device 100 to support obtaining of the PQ parameter file from the video file storage structure provided in this embodiment of this application. The PQ parameter file is used for a video enhancement module in the terminal device 100 to perform algorithm enhancement input to provide a video enhancement capability, to improve video playback experience on the terminal device 100.

The system architecture shown in FIG. 6 is specifically described below.
1. PQ algorithm training module: The PQ algorithm training module may support training of a corresponding PQ parameter model for a video category or a specific video based on a corresponding terminal parameter.
2. PQ parameter file generation module: generates a video-related PQ parameter file based on the PQ parameter model output by the PQ algorithm training module, and synchronizes the PQ parameter file to the video distribution source station.
3. Video file storage: a data and video file storage structure and implementation of the video distribution source station and the CDN. The video file storage structure may include an index file, a video binary streaming file (which is usually a file with a file name extension of .ts or .mp4), and a PQ parameter file. The video file storage structure is a file storage structure formed by the foregoing three types of files based on a structural relationship.
4. Video playback module: The video playback module is a module for downloading, interpreting, decoding, and rendering a video file in the terminal device 100. The video playback module downloads a video file from the video distribution source station, interprets the video file based on the video file storage structure, and then implements a playback operation for the video file on the device side through decoding and rendering. In this embodiment of this application, the video playback module is responsible for triggering the PQ parameter file interpretation module to interpret a PQ parameter applicable to a to-be-played video on the terminal, and then inputting the PQ parameter to the video enhancement module to trigger a video enhancement operation during video decoding and rendering.
5. PQ parameter file interpretation module: The PQ parameter file interpretation module provides a function of interpreting the PQ parameter file, and is responsible for downloading and interpreting the PQ parameter file, and obtaining, from the PQ parameter file through matching based on information about the terminal device 100, the PQ parameter applicable to the to-be-played video.
6. Video enhancement module: performs a device-side video enhancement operation based on a PQ enhancement parameter and binary streaming information of the to-be-played video. In this embodiment of this application, the video enhancement module uses the received PQ parameter obtained from the PQ parameter file interpretation module as an input parameter of an enhancement algorithm.

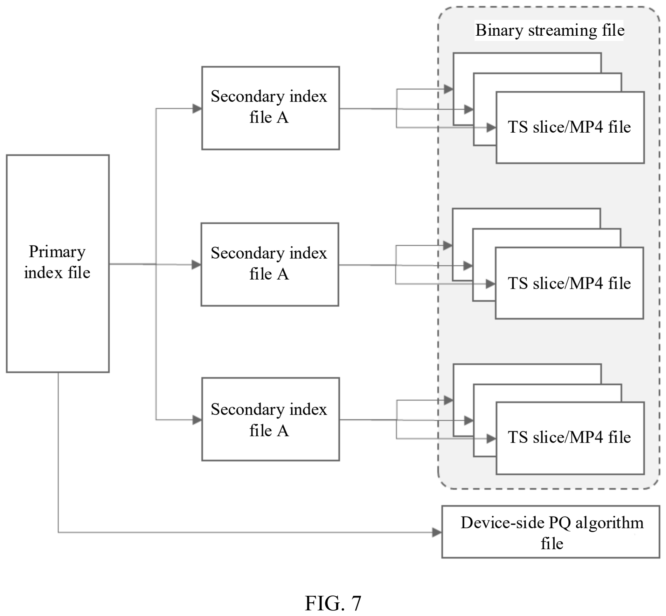

A diagram of a video file storage structure used as a key technology in embodiments of this application may be shown in FIG. 7. In embodiments of this application, based on a multilevel video file storage structure of HLS or DASH, a definition of a new device-side PQ parameter file is provided, and a definition of a primary index file is modified. FIG. 7 is a diagram of a video file storage structure according to an embodiment of this application.

A device-side PQ parameter file and a primary index file in the video file storage structure shown in FIG. 7 are described below.
1. Device-side PQ parameter file: namely, a device-side PQ algorithm file in FIG. 7. The device-side PQ parameter file is used to describe information about terminal enhancement PQ parameters used for a video file on different types of terminal devices 100. Therefore, a basic structure of the PQ parameter file is a data storage structure in which a series to which the terminal device 100 belongs or a model of the terminal device 100 is a keyword and a PQ parameter is main storage information, and may support extension of a PQ parameter list corresponding to the terminal device 100, to dynamically adjust input of terminal enhancement PQ algorithms executed for the video file on different terminals. The PQ parameter may include parameter values of a video enhancement algorithm, for example, parameters and curve values in dimensions of definition, noise reduction, contrast, color, HDR, dimming, and/or the like.
2. Primary index file: In the primary index file, different encoding formats, definitions, bit rates, and other information of a video and relative storage address information of a secondary index file corresponding to the primary index file are identified by tags. In this embodiment of this application, an optional tag for identifying the device-side PQ parameter file is obtained through extension, to identify relative storage address information of the device-side PQ parameter file.

An implementation process of embodiments of this application relates to a transcoding process, an algorithm training process, and a video file distribution process of a server 400, and a video downloading process, an interpretation process, a terminal enhancement process, a decoding and rendering process, and the like of a terminal device 100. The processes in embodiments of this application are described below.

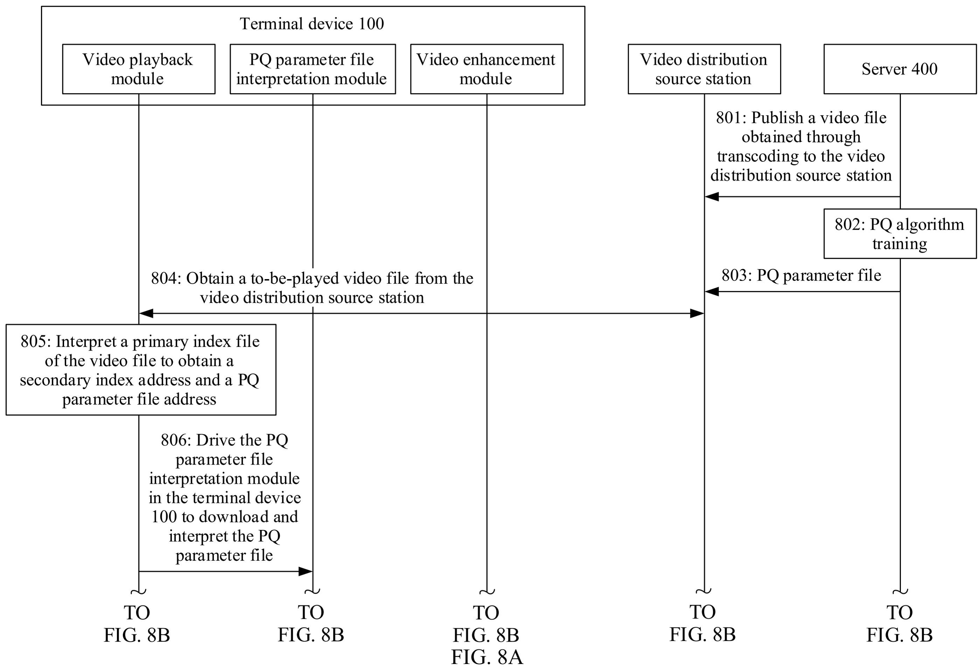

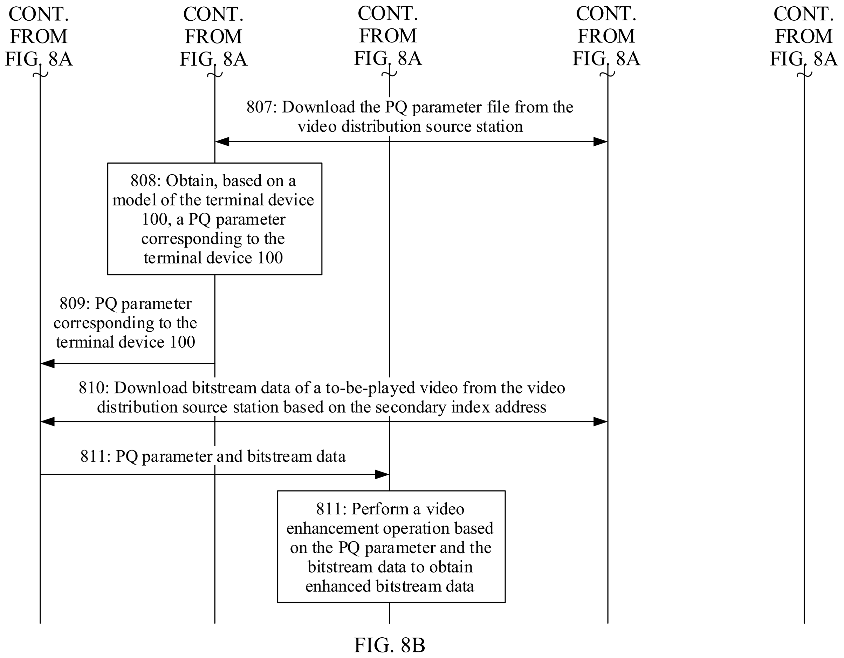

FIG. 8A and FIG. 8B are a flowchart of a video enhancement method according to an embodiment of this application. As shown in FIG. 8A and FIG. 8B, the video enhancement method may include the following steps.

Step 801: During implementation of video transcoding and streaming file encapsulation, a server 400 adjusts a storage data structure of a video file, adds a data management model for a PQ parameter file, publishes a video file obtained through transcoding to a video distribution source station, and adjusts video file storage in the video distribution source station (CDN).

Step 802: A PQ algorithm training module is added to the server 400 to support an algorithm engineer in performing device-side PQ algorithm training for a specific video and a model of a terminal device 100.

Step 803: After the PQ algorithm training is completed, the server 400 generates a PQ parameter file through a PQ parameter file generation module, and then updates the PQ parameter file to the video distribution source station (CDN).

Step 804: A video playback module in the terminal device 100 obtains a to-be-played video file from the video distribution source station.

Step 805: The video playback module in the terminal device 100 interprets a primary index file of the video file to obtain a secondary index address and a PQ parameter file address.

Step 806: The video playback module in the terminal device 100 drives a PQ parameter file interpretation module in the terminal device 100 to download and interpret the PQ parameter file.

Step 807: The PQ parameter file interpretation module downloads the PQ parameter file from the video distribution source station based on the PQ parameter file address obtained by the video playback module through interpretation.

Step 808: The PQ parameter file interpretation module obtains, based on the model of the terminal device 100, a PQ parameter corresponding to the terminal device 100.

Step 809: The PQ parameter file interpretation module sends, to the video playback module, the PQ parameter corresponding to the terminal device 100.

Step 810: The video playback module downloads bitstream data of a to-be-played video from the video distribution source station based on the secondary index address.

Step 811: The video playback module sends the PQ parameter and the bitstream data to a video enhancement module in the terminal device 100, and the video enhancement module performs a video enhancement operation based on the PQ parameter and the bitstream data to obtain enhanced bitstream data.

The following describes the video enhancement method provided in embodiments of this application from three aspects: a server 400, a video distribution source station, and a terminal device 100.

### (1) Implementation process of the server 400

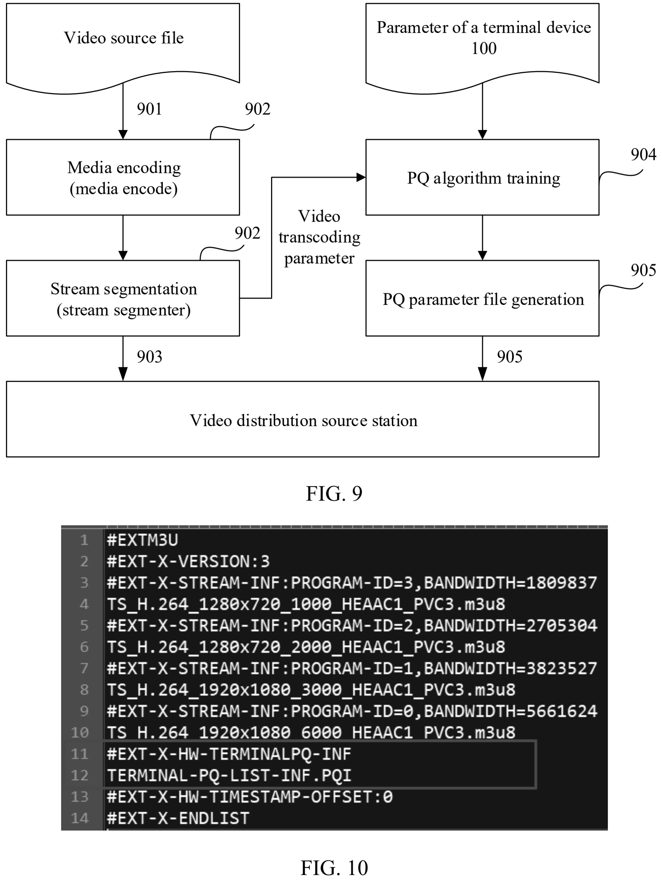

In embodiments of this application, the server 400 (a video platform server) provides an encoding operation and a stream segmentation operation for a video source file, generates a video file, uploads the video file to the video distribution source station, performs PQ algorithm training based on a parameter of the terminal device 100 and a video transcoding parameter, generates a PQ parameter file, and uploads the PQ parameter file to the video distribution source station. FIG. 9 is a flowchart of a video enhancement method according to another embodiment of this application. As shown in FIG. 9, a process performed by the server 400 may include the following steps.

Step 901: The server 400 obtains a recorded video source file.

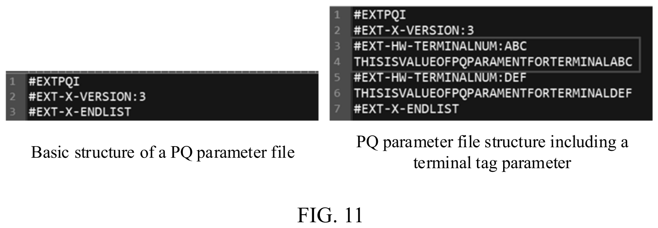

Step 902: The server 400 encodes the video source file into video files with different bit rates through a video encoding module and a video stream segmentation module, and encapsulates, by using an HLS protocol, a DASH protocol, or the like, video files obtained through transcoding and segmentation, to form a complete finished-video file structure. When the server 400 encapsulates the video file by using the HLS protocol, the DASH protocol, or the like and generates a primary index file, the server 400 constructs a basic framework of a PQ parameter file of the video file based on a basic PQ parameter file framework (as shown in FIG. 11), and adds a PQ parameter file tag and a storage address of a corresponding PQ parameter file to the primary index file (as shown in FIG. 10).

Step 903: The server 400 sends the PQ parameter file and the video file to the video distribution source station (a CDN is an acceleration method for the video distribution source station during video distribution, is a common method for an online video platform, and is not described in detail in this embodiment of this application).

In this case, the video file on the video distribution source station may be downloaded and played by the terminal device 100. However, because the PQ parameter file has only the basic framework in this case, during playback, the terminal device 100 cannot obtain a specific PQ parameter from the PQ parameter file and input the PQ parameter to a video enhancement module of the terminal device 100.

Step 904: A PQ algorithm training module in the server 400 performs PQ algorithm training by using a parameter of the terminal device 100 as input and based on a video transcoding parameter (which may be a single video transcoding parameter or a type of video transcoding parameter), to form a PQ algorithm model that matches the video transcoding parameter and the parameter of the terminal device 100.

Step 905: A PQ parameter file generation module in the server 400 generates, for the video file generated in step 902 and based on the PQ algorithm model and the video file, a PQ parameter that is in the PQ parameter file and that is used for the terminal device 100, and updates the PQ parameter to the PQ parameter file generated in step 902. After step 905 is completed, the PQ parameter file includes full information of the basic framework and the PQ parameter used for the terminal device 100.

When a video has a playback experience problem on a terminal device 100 or a new terminal device 100 is added, the server 400 may perform step 904 and step 905 again, to re-train the PQ algorithm model and update the PQ parameter that is in the PQ parameter file and that is used for the terminal device 100, to better adapt to playback experience of a video file on different terminal devices 100 without adjusting the video file.

### (2) Implementation process of the video distribution source station

As a distribution module of an online video operation platform, the video distribution source station provides video storage and HTTP communication-based video distribution and download service capabilities. In embodiments of this application, the video distribution source station provides a video file storage function, to support storage and updates of a video and a corresponding PQ parameter file. A video file storage structure on the video distribution source station may be shown in FIG. 7. A device-side PQ parameter file is added to the video file storage structure, and an optional tag for identifying the device-side PQ parameter file is added to a primary index file.

FIG. 10 is a diagram of a structure of a primary index file according to an embodiment of this application. In the structure shown in FIG. 10, an M3U8 primary index file of an HLS encapsulation protocol is used as an example for description. FIG. 11 is a diagram of a structure of a PQ parameter file according to an embodiment of this application. In the structure shown in FIG. 11, the structure of the PQ parameter file is described with reference to a tag definition format of an M3U8 index file of the HLS encapsulation protocol. Certainly, embodiments of this application are not limited thereto. During specific implementation, different file formats based on tag descriptions may be used for implementation. For example, a tag description method based on an extensible markup language (extensible markup language, XML) format is used in a DASH encapsulation protocol-based index file (an .MPD file).

Refer to FIG. 10. In the M3U8 primary index file, a relative storage address of a PQ parameter file is identified by an extended user-defined tag "#EXT-X-HW-TERMINALPQ-INF" without modifying a basic file structure or a tag definition of an index file defined in the HLS protocol. "TERMINALPQ-LIST-INFO.PQI" in FIG. 10 is address information of the PQ parameter file relative to an M3U8 file storage directory. Provided that a file name of the PQ parameter file complies with a file name definition convention of a mainstream operating system, adjustment of the file name and a file name extension definition of the PQ parameter file does not affect implementation effect of embodiments of this application.

Refer to FIG. 11. In the PQ parameter file, a tag description file structure is used to store a PQ parameter corresponding to the terminal device 100. Usually, a tag description file includes a file header, a file version number, a file end tag, and a data tag. A name and a storage path of the PQ parameter file need to be the same as a file name and a storage address that are described in the relative address of the PQ parameter file in the primary index file.

FIG. 11 shows an example structure of a PQ parameter file defined with reference to an M3U8 tag definition form. A diagram on the left in FIG. 11 shows a basic file framework, including tag information of a file header, a file version number, and a file end. In a diagram on the right in FIG. 11, the terminal device 100 and a list of PQ parameters corresponding to the terminal device 100 are added to the basic file framework, where "#EXT-HW-TERMINALNUM" is a tag definition, "ABC" and "DEF" are example information about the corresponding terminal device 100, and "THISISVALUEOFPQPARAMETFORTERMINALABC" is an example text expression of a PQ parameter corresponding to the terminal device 100.

The tag definition, the information about the terminal device 100, and the PQ parameter shown in FIG. 11 may be expressed in a text form, and a specific naming manner or expression manner does not affect implementation effect of embodiments of this application.

A text definition of the PQ parameter may include parameters and curve values in dimensions of definition, noise reduction, contrast, color, HDR, dimming (dimming), and/or the like. The text definition of the PQ parameter may be extended and adjusted according to an actual input parameter requirement of an enhancement algorithm of the terminal device 100. An organization sequence and an organization form of parameter text may be consistent with interpretation logic of a specific implementation of a PQ parameter file interpretation module. Adjustment of the interpretation logic of the PQ parameter file interpretation module and the organization form of the parameter text does not affect implementation effect of embodiments of this application.

### (3) Implementation process of the terminal device 100 (a video playback terminal)

After a user selects a to-be-played video, the terminal device 100 may download a video file of the to-be-played video from the video distribution source station through HTTP, and perform decoding, rendering, and playing. In this process, a video enhancement operation may be triggered based on a capability of the terminal device 100, to improve video playback experience. In this embodiment, the terminal device 100 downloads and interprets a PQ parameter file through a PQ parameter file interpretation module.

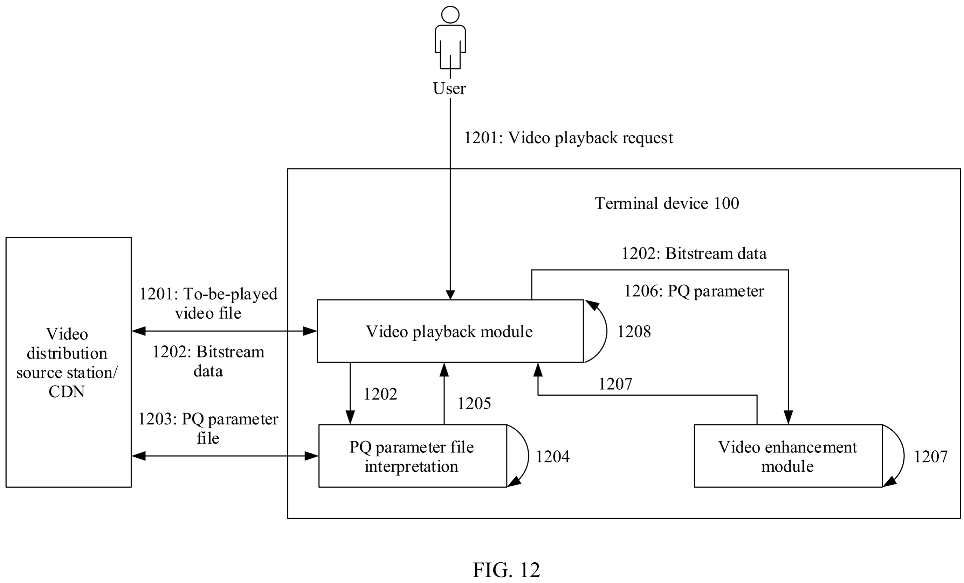

FIG. 12 is a flowchart of a video enhancement method according to still another embodiment of this application. As shown in FIG. 12, a process performed by the terminal device 100 may include the following steps.

Step 1201: After receiving a video playback request from a user, a video playback module downloads a to-be-played video file from the video distribution source station based on information about a to-be-played video selected by the user, interprets the video file according to an encapsulation protocol of the video file, interprets a primary index file of the video file to obtain a secondary index address of the to-be-played video, adds logic for interpreting a tag of a PQ parameter file to logic for interpreting the primary index file of the video file, and if the primary index file includes the tag of the PQ parameter file, obtains a PQ parameter file address.

Step 1202: The video playback module inputs the PQ parameter file address to a PQ parameter file interpretation module, and downloads, based on the secondary index address, bitstream data of the to-be-played video from the video distribution source station, and the video playback module sends the bitstream data of the to-be-played video to a video enhancement module.

Step 1203: After receiving the PQ parameter file address input by the video playback module, the PQ parameter file interpretation module downloads the PQ parameter file of the to-be-played video from the video distribution source station.

Step 1204: The PQ parameter file interpretation module interprets the PQ parameter file based on a structure (shown in FIG. 11) of the PQ parameter file to obtain a PQ parameter corresponding to the terminal device 100.

Step 1205: The PQ parameter file interpretation module sends, to the video playback module, the PQ parameter corresponding to the terminal device 100.

Step 1206: After receiving the PQ parameter corresponding to the terminal device 100, the video playback module sends, to the video enhancement module, the PQ parameter corresponding to the terminal device 100.

Step 1207: The video enhancement module performs a video enhancement operation based on the PQ parameter and the bitstream data of the to-be-played video to obtain enhanced bitstream data, and the video enhancement module sends the enhanced bitstream data to the video playback module.

Step 1208: The video playback module performs a decoding operation, a rendering operation, and a playback operation on the enhanced bitstream data.

During specific implementation, to improve compatibility of video enhancement on the terminal device 100, a set of default PQ parameters may be preset on the terminal device 100. If the PQ parameter file interpretation module cannot obtain, from the PQ parameter file of the video, a PQ parameter used by the terminal device 100, the video enhancement module may perform a video enhancement operation by using a default PQ parameter. This operation does not affect implementation effect of this embodiment of this application.

As described above, this embodiment of this application provides a video enhancement method, to resolve a problem in an online video playback service that a video enhancement parameter of a terminal cannot adapt to a transcoding parameter of a specific to-be-played video, and a problem that poor adaptation between a transcoded video and a new terminal device cannot be addressed by quickly adjusting a playback parameter. In the video enhancement method provided in this embodiment of this application, application effect of a video enhancement feature of a terminal can be effectively applied, to improve video playback experience of the terminal device 100.

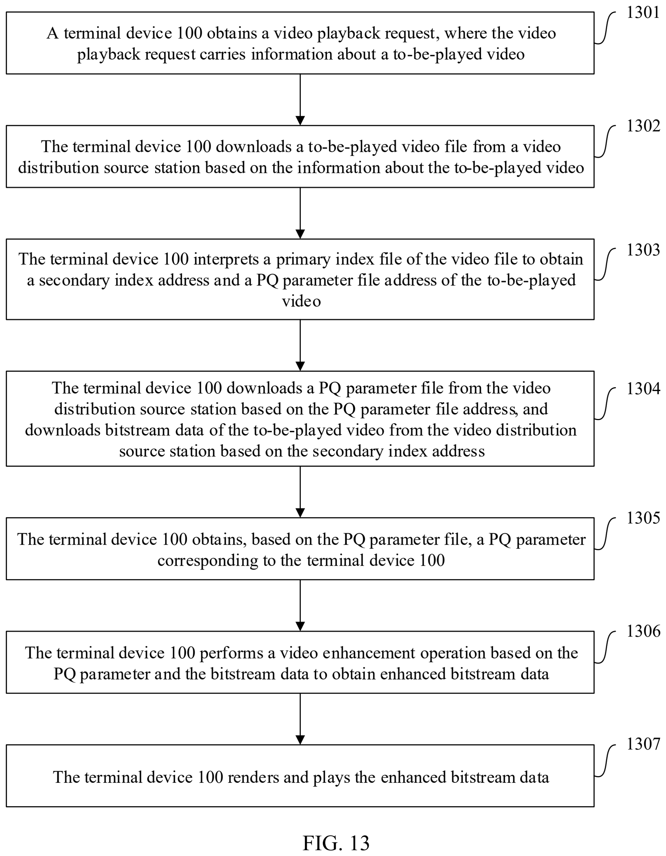

FIG. 13 is a flowchart of a video enhancement method according to still another embodiment of this application. As shown in FIG. 13, the video enhancement method may include the following steps.

Step 1301: The terminal device 100 obtains a video playback request, where the video playback request carries information about a to-be-played video.

Step 1302: The terminal device 100 downloads a to-be-played video file from the video distribution source station based on the information about the to-be-played video.

Step 1303: The terminal device 100 interprets a primary index file of the video file to obtain a secondary index address and a PQ parameter file address of the to-be-played video.

Specifically, that the terminal device 100 interprets the primary index file of the video file to obtain the secondary index address and the PQ parameter file address of the to-be-played video may be as follows: The terminal device 100 interprets the primary index file of the video file according to an encapsulation protocol of the video file, to obtain the secondary index address of the to-be-played video; and if the primary index file includes a tag of a PQ parameter file, obtains a PQ parameter file address corresponding to the tag.

Step 1304: The terminal device 100 downloads the PQ parameter file from the video distribution source station based on the PQ parameter file address, and downloads bitstream data of the to-be-played video from the video distribution source station based on the secondary index address.

Step 1305: The terminal device 100 obtains, based on the PQ parameter file, a PQ parameter corresponding to the terminal device 100.

Specifically, that the terminal device 100 obtains, based on the PQ parameter file, the PQ parameter corresponding to the terminal device 100 may be as follows: The terminal device 100 interprets the PQ parameter file based on a structure of the PQ parameter file, and obtains, based on information about the terminal device 100, the corresponding PQ parameter from a PQ parameter included in the PQ parameter file.

In this embodiment, a basic structure of the PQ parameter file is a data storage structure in which the information about the terminal device 100 is a keyword and the PQ parameter is main storage information. The information about the terminal device 100 may include a series to which the terminal device 100 belongs and/or a model of the terminal device 100.

Step 1306: The terminal device 100 performs a video enhancement operation based on the PQ parameter and the bitstream data to obtain enhanced bitstream data.

Further, after step 1306, the method may further include the following step.

Step 1307: The terminal device 100 renders and plays the enhanced bitstream data.

In the foregoing video enhancement method, the terminal device 100 obtains the video playback request that carries the information about the to-be-played video, and downloads the to-be-played video file from the video distribution source station based on the information about the to-be-played video. Then the terminal device 100 interprets the primary index file of the video file to obtain the secondary index address and the PQ parameter file address of the to-be-played video, downloads the PQ parameter file from the video distribution source station based on the PQ parameter file address, and downloads the bitstream data of the to-be-played video from the video distribution source station based on the secondary index address. Finally, the terminal device 100 obtains, based on the PQ parameter file, the PQ parameter corresponding to the terminal device 100, and performs the video enhancement operation based on the PQ parameter and the bitstream data to obtain the enhanced bitstream data. In this way, effect of adaptation between a video enhancement feature of the terminal device 100 and different types of videos can be improved, to improve video playback effect of the terminal device 100.

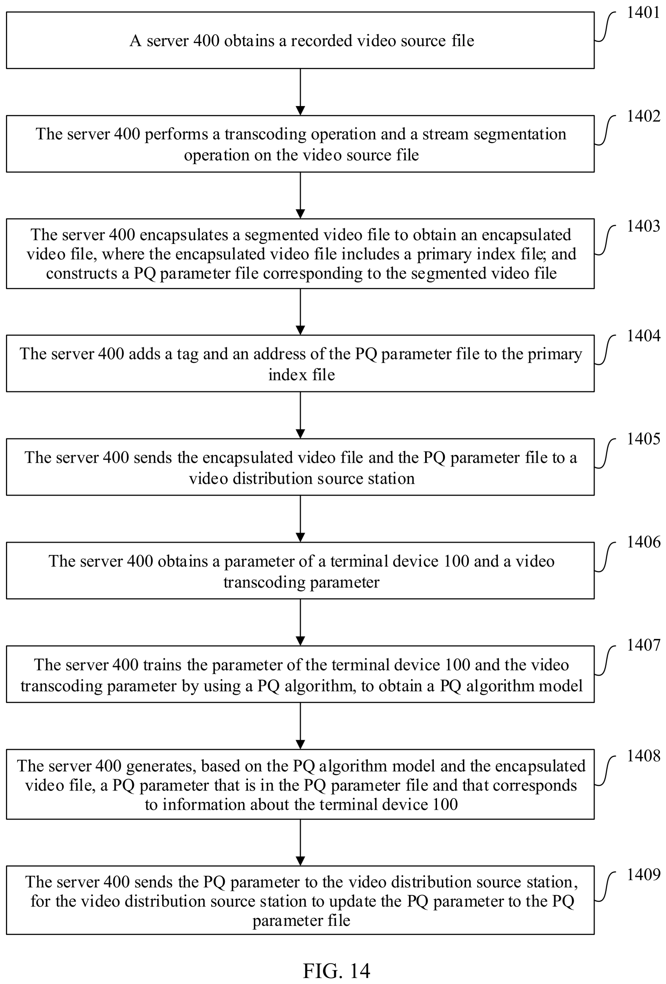

FIG. 14 is a flowchart of a video enhancement method according to still another embodiment of this application. As shown in FIG. 14, the video enhancement method may include the following steps.

Step 1401: The server 400 obtains a recorded video source file.

Step 1402: The server 400 performs a transcoding operation and a stream segmentation operation on the video source file.

Step 1403: The server 400 encapsulates a segmented video file to obtain an encapsulated video file, where the encapsulated video file includes a primary index file; and constructs a PQ parameter file corresponding to the segmented video file.

The PQ parameter file includes information about the terminal device 100, and the information about the terminal device 100 may include a series to which the terminal device 100 belongs and/or a model of the terminal device 100.

Step 1404: The server 400 adds a tag and an address of the PQ parameter file to the primary index file.

Step 1405: The server 400 sends the encapsulated video file and the PQ parameter file to the video distribution source station.

Further, after step 1405, the method may further include the following steps.

Step 1406: The server 400 obtains a parameter of the terminal device 100 and a video transcoding parameter.

Step 1407: The server 400 trains the parameter of the terminal device 100 and the video transcoding parameter by using a PQ algorithm, to obtain a PQ algorithm model.

Step 1408: The server 400 generates, based on the PQ algorithm model and the encapsulated video file, a PQ parameter that is in the PQ parameter file and that corresponds to the information about the terminal device 100.

Step 1409: The server 400 sends the PQ parameter to the video distribution source station, for the video distribution source station to update the PQ parameter to the PQ parameter file.

In the foregoing video enhancement method, the server 400 obtains the recorded video source file; performs the transcoding operation and the stream segmentation operation on the video source file; encapsulates the segmented video file to obtain the encapsulated video file, where the encapsulated video file includes the primary index file; and constructs the PQ parameter file corresponding to the segmented video file. Then the server 400 adds the tag and the address of the PQ parameter file to the primary index file, and sends the encapsulated video file and the PQ parameter file to the video distribution source station. Further, the server 400 generates a PQ parameter corresponding to the information about the terminal device 100, and sends the PQ parameter to the video distribution source station, and the video distribution source station updates the PQ parameter to the PQ parameter file. In this way, the PQ parameter can be generated based on both the parameter of the terminal device 100 and the video transcoding parameter, to effectively implement parameter collaboration between the server 400 and the terminal device 100. Further, this can improve effect of adaptation between a video enhancement feature of the terminal device 100 and different types of videos, to improve video playback effect of the terminal device 100.

It can be understood that some or all of the steps or the operations in the foregoing embodiments are merely examples, and other operations or variations of various operations may alternatively be performed in embodiments of this application. In addition, the steps may be performed in an order different from the order shown in the foregoing embodiments, and not all of the operations in the foregoing embodiments are necessarily performed.

It can be understood that, to implement the foregoing functions, a terminal device includes a corresponding hardware module and/or software module for performing the functions. Algorithm steps in the examples described with reference to embodiments disclosed in this application can be implemented by hardware or a combination of hardware and computer software in this application. Whether a function is performed by hardware or hardware driven by computer software depends on particular applications and design constraints of the technical solutions. A person skilled in the art may use different methods to implement the described functions for each particular application with reference to embodiments. However, it should not be considered that the implementation goes beyond the scope of this application.

In embodiments, the terminal device may be divided into functional modules based on the foregoing method embodiments. For example, each functional module may be obtained through division based on each corresponding function, or two or more functions may be integrated into one module. The integrated module may be implemented in a form of hardware. It should be noted that division into the modules in embodiments is an example, and is merely logical function division. During actual implementation, another division manner may be used.

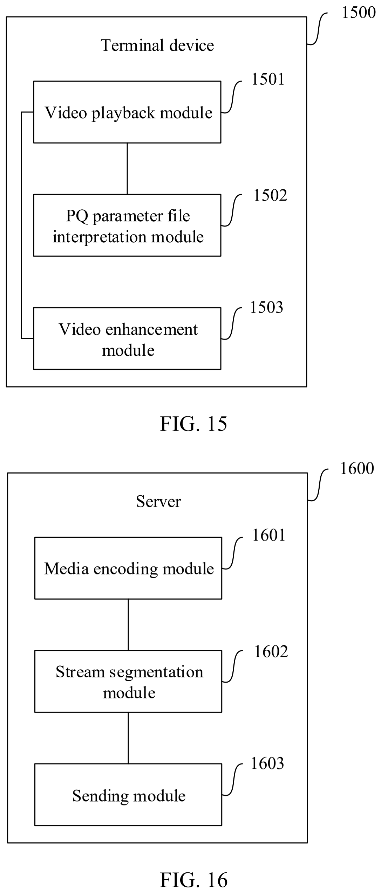

FIG. 15 is a diagram of a structure of a terminal device according to another embodiment of this application. When each functional module is obtained through division based on each corresponding function, FIG. 15 is a diagram of a possible composition of a terminal device 1500 in the foregoing embodiments. As shown in FIG. 15, the terminal device 1500 may include a video playback module 1501, a PQ parameter file interpretation module 1502, and a video enhancement module 1503.

The video playback module 1501 is configured to: obtain a video playback request, where the video playback request carries information about a to-be-played video; download a to-be-played video file from a video distribution source station based on the information about the to-be-played video; interpret a primary index file of the video file to obtain a secondary index address and a PQ parameter file address of the to-be-played video; and download bitstream data of the to-be-played video from the video distribution source station based on the secondary index address.

The PQ parameter file interpretation module 1502 is configured to download the PQ parameter file from the video distribution source station based on the PQ parameter file address, and obtain, based on the PQ parameter file, a PQ parameter corresponding to the terminal device.

The video enhancement module 1503 is configured to perform a video enhancement operation based on the PQ parameter and the bitstream data to obtain enhanced bitstream data.

Further, the video playback module 1501 is configured to: after the video enhancement module 1503 performs the video enhancement operation to obtain the enhanced bitstream data, render and play the enhanced bitstream data.

In this embodiment, the PQ parameter file interpretation module 1502 is specifically configured to: interpret the primary index file of the video file according to an encapsulation protocol of the video file, to obtain the secondary index address of the to-be-played video; and if the primary index file includes a tag of the PQ parameter file, obtain a PQ parameter file address corresponding to the tag.

The PQ parameter file interpretation module 1502 is specifically configured to interpret the PQ parameter file based on a structure of the PQ parameter file, and obtain, based on information about the terminal device, the corresponding PQ parameter from a PQ parameter included in the PQ parameter file.

It should be noted that all related content of the steps in the method embodiment shown in FIG. 13 in this application may be cited in function descriptions of corresponding functional modules. Details are not described herein again.

The terminal device 1500 provided in this embodiment is configured to perform the video enhancement method provided in the embodiment shown in FIG. 13 in this application, and therefore can achieve the same effect as the method.

It should be understood that the terminal device 1500 may correspond to the terminal device 100 shown in FIG. 3. The functions of the video playback module 1501 may be implemented by the processor 110, the antenna 1, and the mobile communication module 150 in the terminal device 100 shown in FIG. 3, and/or implemented by the processor 110, the antenna 2, and the wireless communication module 160, and implemented by the processor 110 and the display 194 in the terminal device 100 shown in FIG. 3. The functions of the PQ parameter file interpretation module 1502 and the video enhancement module 1503 may be implemented by the processor 110 in the terminal device 100 shown in FIG. 1.

When an integrated unit is used, the terminal device 1500 may include a processing module, a storage module, and a communication module.

The processing module may be configured to control and manage actions of the terminal device 1500, for example, may be configured to support the terminal device 1500 in performing the steps performed by the video playback module 1501, the PQ parameter file interpretation module 1502, and the video enhancement module 1503. The storage module may be configured to support the terminal device 1500 in storing program code, data, and the like. The communication module may be configured to support communication between the terminal device 1500 and another device.

The processing module may be a processor or a controller, and may implement or execute various example logical blocks, modules, and circuits described with reference to content disclosed in this application. The processor may alternatively be a combination for implementing a computing function, for example, a combination including one or more microprocessors, or a combination of a digital signal processor (digital signal processor, DSP) and a microprocessor. The storage module may be a memory. The communication module may be specifically a device, for example, a radio frequency circuit, a Bluetooth chip, and/or a Wi-Fi chip, that interacts with another electronic device.

In an embodiment, when the processing module is a processor and the storage module is a memory, the terminal device 1500 in this embodiment may be a device of the structure shown in FIG. 3.

Similarly, it can be understood that, to implement the foregoing functions, a server includes a corresponding hardware module and/or software module for performing the functions. Algorithm steps in the examples described with reference to embodiments disclosed in this application can be implemented by hardware or a combination of hardware and computer software in this application. Whether a function is performed by hardware or hardware driven by computer software depends on particular applications and design constraints of the technical solutions. A person skilled in the art may use different methods to implement the described functions for each particular application with reference to embodiments. However, it should not be considered that the implementation goes beyond the scope of this application.

In embodiments, the server may be divided into functional modules based on the foregoing method embodiments. For example, each functional module may be obtained through division based on each corresponding function, or two or more functions may be integrated into one module. The integrated module may be implemented in a form of hardware. It should be noted that division into the modules in embodiments is an example, and is merely logical function division. During actual implementation, another division manner may be used.

FIG. 16 is a diagram of a structure of a server according to another embodiment of this application. When each functional module is obtained through division based on each corresponding function, FIG. 16 is a diagram of a possible composition of a server 1600 in the foregoing embodiments. As shown in FIG. 16, the server 1600 may include a media encoding module 1601, a stream segmentation module 1602, and a sending module 1603.

The media encoding module 1601 is configured to obtain a recorded video source file, and perform a transcoding operation on the video source file.

The stream segmentation module 1602 is configured to: perform a stream segmentation operation on a video file obtained through the transcoding operation; encapsulate a segmented video file to obtain an encapsulated video file, where the encapsulated video file includes a primary index file; construct a PQ parameter file corresponding to the segmented video file, where the PQ parameter file includes information about a terminal device; and add a tag and an address of the PQ parameter file to the primary index file.

The sending module 1603 is configured to send the encapsulated video file and the PQ parameter file to a video distribution source station.

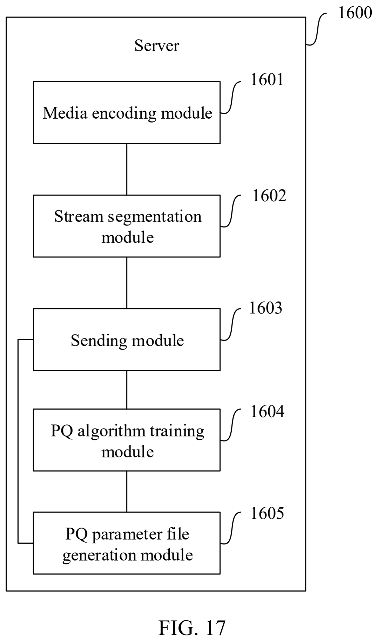

FIG. 17 is a diagram of a structure of a server according to still another embodiment of this application. Compared with the server shown in FIG. 16, a difference lies in that the server 1600 shown in FIG. 17 may further include a PQ algorithm training module 1604 and a PQ parameter file generation module 1605.

The PQ algorithm training module 1604 is configured to: after the sending module 1603 sends the encapsulated video file and the PQ parameter file to the video distribution source station, obtain a parameter of the terminal device and a video transcoding parameter, and train the parameter of the terminal device and the video transcoding parameter by using a PQ algorithm to obtain a PQ algorithm model.

The PQ parameter file generation module 1605 is configured to generate, based on the PQ algorithm model and the encapsulated video file, a PQ parameter corresponding to the information about the terminal device in the PQ parameter file.

The sending module 1603 is configured to send the PQ parameter to the video distribution source station, for the video distribution source station to update the PQ parameter to the PQ parameter file.

It should be noted that all related content of the steps in the method embodiment shown in FIG. 14 in this application may be cited in function descriptions of corresponding functional modules. Details are not described herein again.

The server 1600 provided in this embodiment is configured to perform the video enhancement method provided in the embodiment shown in FIG. 14 in this application, and therefore can achieve the same effect as the method.

It should be understood that the server 1600 may correspond to the server 400 shown in FIG. 4. The functions of the sending module 1603 may be implemented by the processor 410 and the communication interface 420 in the server 400 shown in FIG. 4. The functions of the media encoding module 1601, the stream segmentation module 1602, the PQ algorithm training module 1604, and the PQ parameter file generation module 1605 may be implemented by the processor 410 in the server 400 shown in FIG. 4.

When an integrated unit is used, the server 1600 may include a processing module, a storage module, and a communication module.

The processing module may be configured to control and manage actions of the server 1600, for example, may be configured to support the server 1600 in performing the steps performed by the media encoding module 1601, the stream segmentation module 1602, the sending module 1603, the PQ algorithm training module 1604, and the PQ parameter file generation module 1605. The storage module may be configured to support the server 1600 in storing program code, data, and the like. The communication module may be configured to support communication between the server 1600 and another device.

The processing module may be a processor or a controller, and may implement or execute various example logical blocks, modules, and circuits described with reference to content disclosed in this application. The processor may alternatively be a combination for implementing a computing function, for example, a combination including one or more microprocessors, or a combination of a digital signal processor (digital signal processor, DSP) and a microprocessor. The storage module may be a memory. The communication module may be specifically a device, for example, a radio frequency circuit, a Bluetooth chip, and/or a Wi-Fi chip, that interacts with another electronic device.

In an embodiment, when the processing module is a processor and the storage module is a memory, the server 1600 in this embodiment may be a device of the structure shown in FIG. 4.

An embodiment of this application further provides a computer-readable storage medium. The computer-readable storage medium stores a computer program. When the computer program is run on a computer, the computer is enabled to perform the method provided in the embodiment shown in FIG. 13 in this application.

An embodiment of this application further provides a computer-readable storage medium. The computer-readable storage medium stores a computer program. When the computer program is run on a computer, the computer is enabled to perform the method provided in the embodiment shown in FIG. 14 in this application.

An embodiment of this application further provides a computer program product. The computer program product includes a computer program. When the computer program is run on a computer, the computer is enabled to perform the method provided in the embodiment shown in FIG. 13 in this application.

An embodiment of this application further provides a computer program product. The computer program product includes a computer program. When the computer program is run on a computer, the computer is enabled to perform the method provided in the embodiment shown in FIG. 14 in this application.

In embodiments of this application, "at least one" means one or more, and "a plurality of" means two or more. "And/or" describes an association relationship between associated objects, and indicates that three relationships may exist. For example, A and/or B may indicate the following cases: Only A exists, both A and B exist, and only B exists, where A and B may be in a singular form or a plural form. The character "/" usually indicates an "or" relationship between the associated objects. "At least one of the following" and a similar expression thereof indicate any combination of the terms, including one of the items or any combination of a plurality of the terms. For example, at least one of a, b, and c may indicate a, b, c, a and b, a and c, b and c, or a, b, and c, where a, b, and c may be in a singular form or a plural form.

A person of ordinary skill in the art may be aware that the units and algorithm steps described in embodiments disclosed in this specification can be implemented by electronic hardware or a combination of computer software and electronic hardware. Whether the functions are performed by hardware or software depends on particular applications and design constraints of the technical solutions. A person skilled in the art may use different methods to implement the described functions for each particular application. However, it should not be considered that the implementation goes beyond the scope of this application.

It can be clearly understood by a person skilled in the art that, for ease and brevity of description, for detailed working processes of the foregoing systems, apparatuses, and units, reference may be made to corresponding processes in the foregoing method embodiments. Details are not described herein again.

In several embodiments provided in this application, when any function is implemented in a form of a software functional unit and sold or used as an independent product, the function may be stored in a computer-readable storage medium. Based on such an understanding, the technical solutions of this application essentially, or the part contributing to the conventional technology, or some of the technical solutions may be implemented in a form of a software product. The computer software product is stored in a storage medium, and includes several instructions for instructing a computer device (which may be a personal computer, a server, a network device, or the like) to perform all or some of the steps of the methods in embodiments of this application. The storage medium includes any medium that can store program code, for example, a USB flash drive, a removable hard disk drive, a read-only memory (read-only memory, ROM), a random access memory (random access memory, RAM), a magnetic disk, or a compact disc.

The foregoing descriptions are merely specific implementations of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. A video enhancement method, comprising:
obtaining a video playback request, wherein the video playback request carries information about a to-be-played video;
downloading a to-be-played video file from a video distribution source station based on the information about the to-be-played video;
interpreting a primary index file of the video file to obtain a secondary index address and a perceptual quantizer PQ parameter file address of the to-be-played video;
downloading the PQ parameter file from the video distribution source station based on the PQ parameter file address, and downloading bitstream data of the to-be-played video from the video distribution source station based on the secondary index address;
obtaining, based on the PQ parameter file, a PQ parameter corresponding to a terminal device; and
performing a video enhancement operation based on the PQ parameter and the bitstream data to obtain enhanced bitstream data.

2. The method according to claim 1, wherein after performing the video enhancement operation based on the PQ parameter and the bitstream data to obtain the enhanced bitstream data, the method further comprises:
rendering and playing the enhanced bitstream data.

3. The method according to claim 1, wherein interpreting the primary index file of the video file to obtain the secondary index address and the perceptual quantizer PQ parameter file address of the to-be-played video comprises:
interpreting the primary index file of the video file according to an encapsulation protocol of the video file, to obtain the secondary index address of the to-be-played video; and
if the primary index file comprises a tag of the PQ parameter file, obtaining a PQ parameter file address corresponding to the tag.

4. The method according to claim 1, wherein obtaining, based on the PQ parameter file, the PQ parameter corresponding to the terminal device comprises:
interpreting the PQ parameter file based on a structure of the PQ parameter file; and
obtaining, based on information about the terminal device, the corresponding PQ parameter from a PQ parameter comprised in the PQ parameter file.

5. A video enhancement method, comprising:
obtaining a recorded video source file;
performing a transcoding operation and a stream segmentation operation on the video source file;
encapsulating a segmented video file to obtain an encapsulated video file, wherein the encapsulated video file comprises a primary index file; and constructing a perceptual quantizer PQ parameter file corresponding to the segmented video file, wherein the PQ parameter file comprises information about a terminal device;
adding a tag and an address of the PQ parameter file to the primary index file; and
sending the encapsulated video file and the PQ parameter file to a video distribution source station.

6. The method according to claim 5, wherein after sending the encapsulated video file and the PQ parameter file to the video distribution source station, the method further comprises:
obtaining a parameter of the terminal device and a video transcoding parameter;
training the parameter of the terminal device and the video transcoding parameter by using a PQ algorithm, to obtain a PQ algorithm model;
generating, based on the PQ algorithm model and the encapsulated video file, a PQ parameter that is in the PQ parameter file and that corresponds to the information about the terminal device; and
sending the PQ parameter to the video distribution source station, for the video distribution source station to update the PQ parameter to the PQ parameter file.

7. A video enhancement apparatus, disposed in a terminal device, wherein the video enhancement apparatus comprises:
a video playback module, configured to: obtain a video playback request, wherein the video playback request carries information about a to-be-played video; download a to-be-played video file from a video distribution source station based on the information about the to-be-played video; interpret a primary index file of the video file to obtain a secondary index address and a perceptual quantizer PQ parameter file address of the to-be-played video; and download bitstream data of the to-be-played video from the video distribution source station based on the secondary index address;
a PQ parameter file interpretation module, configured to download the PQ parameter file from the video distribution source station based on the PQ parameter file address, and obtain, based on the PQ parameter file, a PQ parameter corresponding to the terminal device; and
a video enhancement module, configured to perform a video enhancement operation based on the PQ parameter and the bitstream data to obtain enhanced bitstream data.

8. A video enhancement apparatus, disposed in a server, wherein the video enhancement apparatus comprises:
a media encoding module, configured to obtain a recorded video source file, and perform a transcoding operation on the video source file;
a stream segmentation module, configured to: perform a stream segmentation operation on a video file obtained through the transcoding operation; encapsulate a segmented video file to obtain an encapsulated video file, wherein the encapsulated video file comprises a primary index file; construct a perceptual quantizer PQ parameter file corresponding to the segmented video file, wherein the PQ parameter file comprises information about a terminal device; and add a tag and an address of the PQ parameter file to the primary index file; and
a sending module, configured to send the encapsulated video file and the PQ parameter file to a video distribution source station.

9. A terminal device, comprising:
one or more processors, a memory, a plurality of application programs, and one or more computer programs, wherein the one or more computer programs is/are stored in the memory, the one or more computer programs comprises/comprise instructions, and when the instructions are executed by the terminal device, the terminal device is enabled to perform the method according to any one of claims 1 to 4.

10. A server, comprising:
one or more processors, a memory, a plurality of application programs, and one or more computer programs, wherein the one or more computer programs is/are stored in the memory, the one or more computer programs comprises/comprise instructions, and when the instructions are executed by the server, the server is enabled to perform the method according to claim 5 or 6.

11. A computer-readable storage medium, wherein the computer-readable storage medium stores a computer program, and when the computer program is run on a computer, the computer is enabled to perform the method according to any one of claims 1 to 4.

12. A computer-readable storage medium, wherein the computer-readable storage medium stores a computer program, and when the computer program is run on a computer, the computer is enabled to perform the method according to claim 5 or 6.
